(19) Europäisches Patentamt
European Patent Office
Office européen des brevets

(11) Veröffentlichungsnummer: **0 251 108**
**B1**

# (12) EUROPÄISCHE PATENTSCHRIFT

(45) Veröffentlichungstag der Patentschrift: **21.03.90**

(51) Int. Cl.⁴: **C08J 9/08**, C08L 81/02

(21) Anmeldenummer: **87108931.4**

(22) Anmeldetag: **23.06.87**

## (54) Verfahren zum Verschäumen von thermoplastischen Polyphenylensulfiden.

(30) Priorität: **02.07.86 DE 3622194**

(43) Veröffentlichungstag der Anmeldung: **07.01.88 Patentblatt 88/1**

(45) Bekanntmachung des Hinweises auf die Patenterteilung: **21.03.90 Patentblatt 90/12**

(84) Benannte Vertragsstaaten: **BE DE FR GB IT**

(56) Entgegenhaltungen:
**US-A- 3 998 767**
**US-A- 4 032 683**
**US-A- 4 471 247**

(73) Patentinhaber: **BAYER AG, D-5090 Leverkusen 1 Bayerwerk(DE)**

(72) Erfinder: **Mayska, Paul Johannes, Dr., Bodelschwinghstrasse 18, D-4150 Krefeld(DE)**
Erfinder: **Tresper, Erhard, Dr., Moerser Strasse 394, D-4150 Krefeld(DE)**

EP 0 251 108 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zum Verschäumen von thermoplastischen Polyphenylensulfiden mit $\overline{M}_w$ (Gewichtsmittelmolekulargewichten, gemessen in N-Methylcarprolactam bei 150°C auf Basis einer Eichung mit aromatischen Polyestern) von 5 000 bis 60 000, das dadurch gekennzeichnet ist, daß man oligomere Sulfoncarbonate der Formel (I)

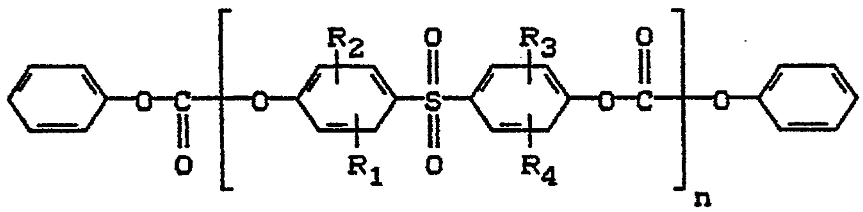

(I)

worin n = 2 bis 10 ist und $R_1$ bis $R_4$ gleich oder verschieden sind und H, Chlor, Brom, $C_1$-$C_{10}$-Alkyl oder $C_6H_5$ sind, in Mengen von 0,1 Gew.-% bis 10 Gew.-%, vorzugs weise von 3 Gew.-% bis 5 Gew.-%, bezogen auf Gesamtgewicht aus (I) und dem zu verschäumenden Polyphenylensulfid, in die Polyphenylensulfide bei Temperaturen von 150 bis 180°C einarbeitet und anschließend nach Zusatz von basischen Katalysatoren in Mengen von 0,1 bis 2,0 Gew.-%, bezogen auf das Gewicht des zu verschäumenden Polyphenylensulfids, auf Temperaturen von 280°C bis 350°C, vorzugsaweise von 300°C bis 320°C für 3 Minuten bis 15 Minuten erhitzt und danach das Reaktionsgemisch in die für die Herstellung des Polyphenylenschaumformkörpers passende Form gießt.

Geeignete Geräte zum Verschäumen sind Spritzgußmaschinen mit Nadelverschlußdüse oder TSG-Maschinen.

Geeignete basische Katalysatoren sind Natrium- oder Kalium-phenolate bzw. -diphenolate wie beispielsweise Bisphenol-A-dinatriumphenolat, oder Natrium- oder Kalium-salze organischer Carbonsäuren wie Kaliumbenzoat oder Natrimbenzoate.

Geeignete Formen sind solche, die aus Aluminiumlegierungen hergestellt sind. Sie müssen leicht zu entlüften sein. Andere geometrische Forderungen werden nicht verlangt.

Die für das erfindungsgemäße Verfahren benötigten oligomeren Sulfoncarbonate der Formel (I) sind in sehr reiner Form entweder durch Phosgenieren einer Mischung der Dihydroxydisulfone (Ib), worin $R_1$ bis $R_4$ die für Formel (I) genannte Bedeutung haben,

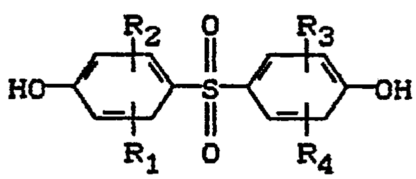

(Ib)

und Phenol im entsprechenden Molverhältnis 2:2 bzw. 3:2 etc. bzw. 10:2 erhältlich (siehe auch DE-A 35 31 361), Seite 3).

Eine andere Möglichkeit zur Herstellung der oligomeren Sulfoncarbonate der Formel (I) in reiner Form besteht darin, daß man gemäß der DE-A 36 19 058 sehr reine Biscarbonate der Formel (Ia), worin $R_1$ bis $R_4$ die für Formel (I) genannte Bedeutung haben,

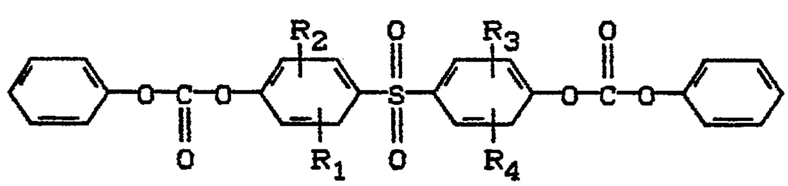

(Ia)

mit neutralen Umesterungskatalysatoren in Mengen von 0,1 ppm bis 10 000 ppm, vorzugsweise in Mengen von 1 ppm bis 1000 ppm, bezogen auf Gewicht an (Ia), bei Temperaturen von 150°C bis 350°C, vorzugsweise von 300°C bis 330°C und bei einer Reaktionszeit von etwa 10 Minuten bis etwa 5 Stunden, vorzugsweise von etwa 30 Minuten bis etwa 60 Minuten reagieren läßt und das sich bildende Phenol und/oder Diphenylcarbonat, vorzugsweise unter vermindertem Druck in bekannter Weise abdestilliert.

Die Durchführung dieser Umesterung kann beispielsweise in einem Rührkessel, einem Kneter oder in einer Schneckenmaschine erfolgen.

Geeignete neutrale Umesterungskatalysatoren dafür sind beispielsweise Tetrabutyltitanat oder Antimontrioxid.

Weitere Einzelheiten sind der DE-A 36 19 058 zu entnehmen.

Die nach dem erfindungsgemäßen Verfahren zu verschäumenden thermoplastischen Polyphenylensulfide mit $\bar{M}w$ von 5 000 bis 60 000 sind bekannte Produkte. Sie sind nach bekannten Verfahren erhältlich (siehe beispielsweise DE-A 32 43 189, 33 18 401 und 33 38 501).

Polyphenylensulfid-Schäume sind in der DOS 2 324 175 beschrieben, wobei Polyphenylensulfid durch Abspaltung von Kohlendioxid oder Carbonylsulfid aus eingebauten Isocyanaten oder Thioisocyanaten ausgeschäumt wird. Eine Art Schaum, eher ein Pulver mit feinporöser Struktur, entsteht nach der DOS 2 018 690, wenn man Polysulfide aus den sehr reaktiven Episulfiden herstellt.

Die erfindungsgemäße Verwendung der Oligocarbonate der Formel (I) hat die Vorteile der hohen Zersetzungstemperatur und der Löslichkeit der Spaltprodukte im Polyphenylensulfid.

Polyphenylensulfidschaumstoffe, insbesondere die nach dem Verfahren der vorliegenden Erfindung erhältlichen, finden technischen Einsatz als Spritzgußteile in der elektronischen Industrie.

<u>Beispiele</u>

1. Herstellung eines oligomeren Sulfoncarbonats gemäß Beispiel 1 DE-A 36 19 058.

47 g Bis(oxyphenyl)sulfon-di-(phenyl)carbonat, das aus 1 Mol 4,4'-Dihydroxydiphenylsulfon und 2 Mol Chlorkohlensäurephenylester nach einem Zweiphasengrenzflächenverfahren in Methylenchlorid/Wasser-Gemisch bei Raumtemperatur hergestellt wurde, wird zusammen mit 200 ppm Titantetraisopropylat aufgeschmolzen. Bei ca. 170°C setzt die Diphenylcarbonat-Abspaltung ein. Wenn sie nachläßt, wird die Temperatur langsam auf die Endtemperatur (320°C) gesteigert. Die Reaktion muß man spätestens dann abbrechen, wenn das schlechter werdende Vakuum die beginnende Zersetzung anzeigt.

Die Schmelzviskosität in Pa.s bei 306°C beträgt 350. Das Molekulargewicht von $\bar{M}_w$ = ca. 10 000 wird nach der HPGPC (Gelpermeatationschromatographie) bei 150°C in N-Methylcaprolactam ermittelt, wobei eine Eichung mittels aromatischem Polyester zugrundeliegt.

Die Elementaranalyse entspricht den theoretisch errechneten Werten. Das IR-Spektrum zeigt deutlich eine Carbonatbande bei 1780 $cm^{-1}$.

2. Herstellung eines Polyphenylensulfidschaums

In einem Kneter werden 100 g Polyphenylensulfid mit einem $\bar{M}w$ (gemessen in N-Methylcaprolactum bei 150°C auf Basis einer Eichung mit aromatischen Polyestern) von 50 000, einer Einfriertemperatur von 90°C und einer Schmelzviskosität von 50 Pa.s, gemessen bei 306°C in bekannter Weise, mit 1 g des Oligocarbonats des Beispiels 1 bei 150°C 10 Minuten eingearbeitet und anschließend bei 170°C mit 0,0001 g (100 ppm) Dikaliumsalz des 2,2-Bis-(4-hydroxyphenyl)-propans vermischt. Danach wird auf 350°C erwärmt.

Es entsteht ein Schaum, dessen Dichte 0,9 g pro $cm^3$ beträgt.

**Patentansprüche**

1. Verfahren zum Verschäumen von thermoplastischen Polyphenylensulfiden mit $\bar{M}w$ (Gerichtsmittelmolekulargewichten, gemessen in N-Methylcaprolactam bei 150°C auf Basis einer Eichung mit aromatischen Polyestern) von 5 000 bis 60 000, dadurch gekennzeichnet, daß man oligomere Sulfoncarbonate der Formel (I)

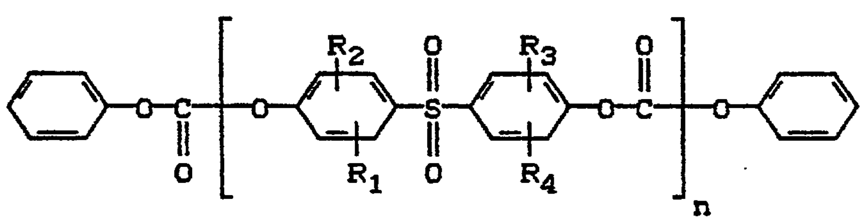

(I)

woring n = 2 bis 10 ist und $R_1$ bis $R_4$ gleich oder verschieden sind und H, Chlor, Brom, $C_1$-$C_{10}$-Alkyl oder $C_6H_5$ sind, in Mengen von 0,1 Gew.-% bis 10 Gew. -%, bezogen auf Gesamtgewicht aus (I) und dem zu verschäumenden Polyphenylensulfid, in die Polyphenylensulfide bei Temperaturen von 150°C bis 180°C einarbeitet und anschließend nach Zusatz von basischen Katalysatoren in Mengen von 0,1 bis 2,0 Gew. -%, bezogen auf das Gewicht des zu verschäumenden Polyphenylensulfids, auf Temperaturen von 280°C bis 350°C, für 3 Minuten bis 15 Minuten erhitzt und danach das Reaktionsgemisch in die für die

Herstellung des Polyphenylenschaumformkörpers passende Form gießt.

2. Verfahren gemäß Anspruch 1, dadurch gekennzeichnet, daß man die oligomeren Sulfoncarbonate der Formel (I) in Mengen von 3 Gew. -% bis 5 Gew. -% einarbeitet.

## Claims

1. Process for foaming thermoplastic polyphenylene sulphides having Mw (weight-average molecular weights, mesured in N-methylcaprolactam at 150°C on the basis of calibration with aromatic polyesters) of 5,000 to 60,000, characterized in that oligomeric sulphone-carbonates of thre formula (I)

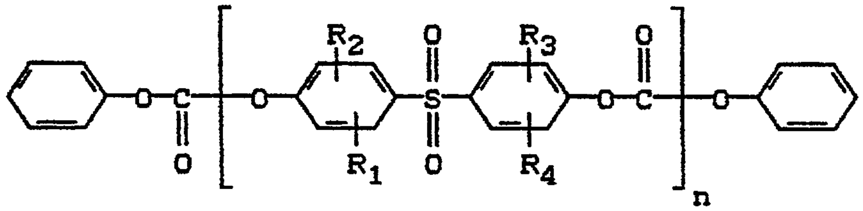

(I)

wherein n=2 to 10 and $R_1$ to $R_4$ are identical or different and are H, chlorine, bromine, $C_1$-$C_{10}$-alkyl or $C_6H_5$, are incorporated in amounts of 0.1 wt.% to 10 wt.%, based on the total weight of (I) and the polyphenylene sulphide to be foamed, into thepolyphenylene sulphides at temperatures of 150°C to 180°C, and after addition of basic catalysts in amounts of 0.1 to 2.0 wt.%, based on the weight of the polyphenylene sulphide to be foamed, the mixture is then heated at temperatures of 280°C to 350°C for 3 minutes to 15 minutes, and the reaction mixture is subsequently poured into the mould suitable for production of the polyphenylene foamed shaped article.

2. Process according to claim 1, characterized in that the oligomeric sulphone-carbonates of the formula (I) are incorporated in amounts of 3 wt.% to 5 wt.%.

## Revendications

1. Procédé de production de mousses de polyphénylène-sulfures thermoplastiques de poids moléculaire $\overline{M}p$ (moyenne en poids du poids moléculaire, mesurée dans le N-méthylcaprolactame à 150°C d'après un étalonnage avec des polyesters aromatiques) de 5000 à 60000, caractérisé en ce qu'on incorpore dans les polyphénylène-sulfures à des températures de 150 à 180°C des sulfone-carbonates oligomères de formule (I)

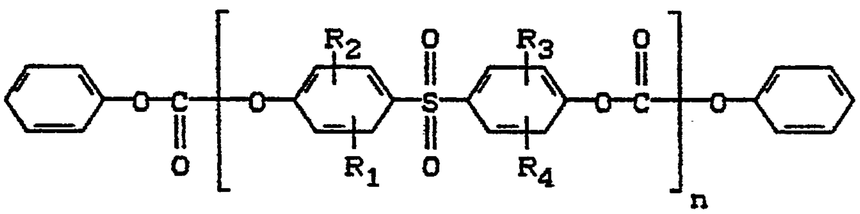

(I)

dans laquelle n a une valeur de 2 à 10 et $R_1$ à $R_4$, identiques ou différents, représentent H, le chlore, le brome, un groupe alkyle en $C_1$ à $C_{10}$ ou le groupe $C_6H_5$, en quantités de 0,1 à 10% en poids, par rapport au poids total de (I) et du polyphénylène-sulfure à transformer en mousse, puis on chauffe à des températures de 280 à 350°C pendant des durées de 3 minutes à 15 minutes après addition de catalyseurs basiques en quantités de 0,1 à 2,0% en poids par rapport au poids du polyphénylène-sulfure à transformer en mousse et on verse ensuite le mélange réactionnel dans le moule adapté à la production de la pièce moulée en mousse de polyphénylène.

2. Procédé suivant la revendication 1, caractérisé en ce que les sulfone-carbonates oligomères de formule (I) sont incorporés en quantités de 3 à 5% en poids.